# EUROPEAN PATENT APPLICATION

(11) **EP 0 860 604 A2**
(43) Date of publication of application: **26.08.1998**
(21) Application number: 98301187.5
(22) Date of filing: 18.02.1998
(51) Int. Cl.: F02M 37/22, B01D 29/11, B01D 29/58

(54) **Fuel filter**

(30) Priority: 22.02.1997 GB 9703726
(71) Applicant: LUCAS INDUSTRIES PUBLIC LIMITED COMPANY, Solihull B90 4LA (GB)
(72) Inventor: Brun, Philippe, 41150 Onzain (FR)
(74) Representative: Bailey, Richard Alan

(57) **Abstract**

A fuel filter is disclosed which comprises a filter medium (16) having a dirty side and a clean side, the filter medium (16) being arranged such that, in use, fuel flows through the filter medium (16) from the dirty side to the clean side, and a filter member (18) located on the dirty side of the filter medium (16), the filter member (18) having a plurality of small openings permitting fuel to flow therethrough, but restricting the flow of large particles to the filter medium (16), and a plurality of large openings (20) whereby fuel containing such large particles is able to flow to the filter medium (16).

## Description

This invention relates to a filter for use in filtering fuel, in particular diesel, for an internal combustion engine.

It is usual to provide a filter in a fuel system for an internal combustion engine in order to remove contaminants from the fuel supplied to an engine as such contaminants may block small passages provided in, for example, the fuel injectors of the fuel system or impede the efficient operation of the engine.

When the fuel passing through the fuel system is cold, for example when the engine is first started, the fuel contains a relatively large amount of solid particles and is relatively viscous as a result of waxing due to the relatively low temperature. These particles tend to clog conventional filters thus forming a significant restriction to fuel flow towards the high pressure pump of the fuel system. As the engine temperature increases, the fuel temperature rises and the waxing problem is reduced. It will be appreciated that the pressure drop across the filter when the fuel temperature is low is disadvantageous, and it is an object of the invention to provide a filter in which this disadvantage is reduced.

According to the present invention there is provided a filter comprising a filter medium having a dirty side and a clean side, the filter medium being arranged such that, in use, fuel flows through the filter medium from the dirty side to the clean side, and a filter member located on the dirty side of the filter medium, the filter member having a plurality of small openings permitting fuel to flow therethrough, but restricting the flow of large particles to the filter medium, and a plurality of large openings whereby fuel containing such large particles is able to flow to the filter medium.

It will be appreciated that when the fuel is relatively cold and contains a high proportion of wax particles, the filter member traps a significant proportion of the particles. Although the trapped particles do restrict the flow of fuel to the filter medium, the provision of the large holes permits a sufficiently high flow of fuel to the filter medium to permit proper operation of the fuel system without generating an excessive pressure drop across the filter. The large holes permit some particles to reach the filter medium, but the quantity of particles reaching the filter medium is insufficient to cause the filter medium to become clogged as before such clogging occurs, the fuel temperature has risen to a sufficient extent that waxing is no longer a problem.

The large holes are conveniently located in a part of the filter member close to a fuel heater, in use, thus the fuel flowing through the large holes is relatively warm thus contains a relatively low proportion of particles and is of low viscosity.

The filter member conveniently takes the form of a mesh.

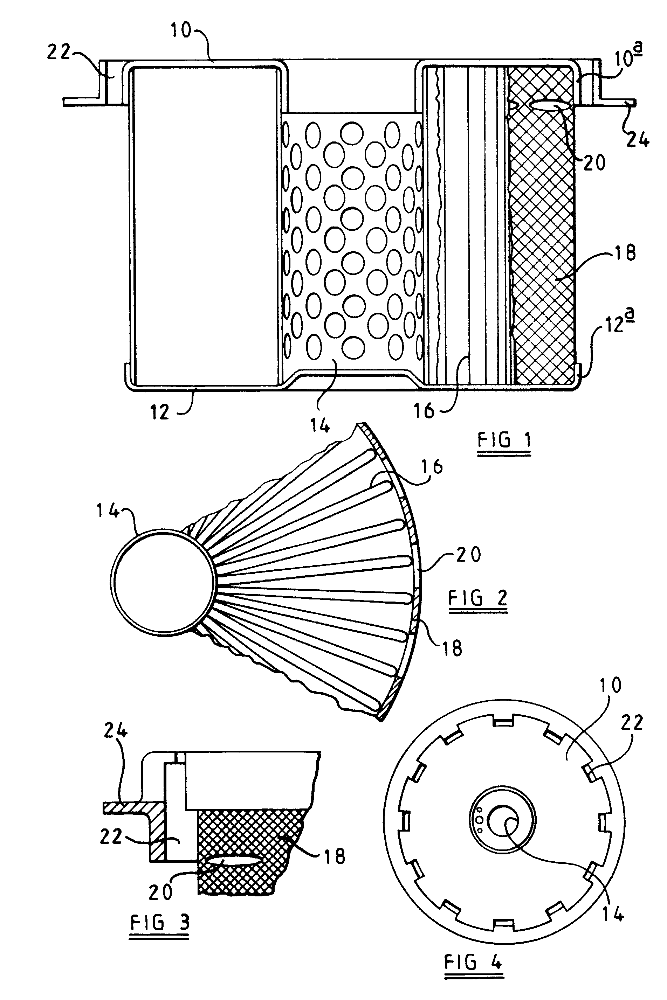

The invention will further be described, by way of example, with reference to the accompanying drawing, in which:-
Figure 1 is a diagrammatic view of a filter in accordance with an embodiment of the invention;
Figure 2 is a sectional view of part of the filter of Figure 1;
Figure 3 is a view, part in section, of part of the filter of Figure 1; and
Figure 4 is a plan view of the filter of Figure 1.

The filter illustrated in the accompanying drawings comprises an upper annular support plate 10 and a lower circular support plate 12. The outer periphery 12a of the lower support plate 12 is turned upwardly, and a part 10a of the upper support plate 10 is turned downwardly. The upper and lower support plates 10, 12 are secured to one another by a perforated tubular member 14 which is aligned with the opening in the centre of the upper annular support plate 10. A pleated paper filter medium 16 is located between the upper and lower support plates 10, 12, the inner periphery of the paper filter medium 16 lying adjacent the tubular member 14.

A filter member 18 in the form of a mesh surrounds the outer periphery of the paper filter medium 16, the mesh filter member 18 being located by the part 10a and periphery 12a of the upper and lower support plates 10, 12. The mesh filter member 18 includes a plurality of perforations which are of dimensions of between approximately 75 and 100 µm. It will be appreciated, therefore, that relatively large particles carried by the flow of fuel through the mesh filter member 18 cannot pass through these perforations and are thus trapped by the mesh filter member 18.

Adjacent the upper support plate 10, the mesh filter member 18 is provided with a plurality of relatively large openings, for example of length between 2 and 8 mm, the large openings 20 permitting fuel to flow to the paper filter medium 16 without removing large particles from the flow of fuel.

In use, the filter is located within a filter bowl, a chamber being defined between the outer periphery of the mesh filter member 18 and the cylindrical wall of the filter bowl, this chamber being supplied with fuel from a suitable fuel reservoir. A cap is secured to the filter bowl, the cap including a central passage which is sealed to the inner periphery of the upper support plate 10 so as to communicate with the interior of the tubular member 14. This passage is connected to the inlet of a high pressure pump. Conveniently, the cap also carries the connection to the fuel reservoir, the annular chamber between the filter bowl and the outer periphery of the mesh filter member 18 communicating with this connection via openings 22 provided in an outwardly extending flange 24 of the upper support plate 10 radially outward of the part 10a thereof which supports the mesh filter member 18. The cap further supports a heater for heating fuel supplied to the filter.

In use, fuel is supplied to the chamber defined between the cylindrical wall of the filter bowl and the outer periphery of the mesh filter member 18. The fuel is drawn through the filter by a pump located downstream of the filter, and it will be appreciated that the flow of fuel through the small perforations of the mesh filter member 18 results in large particles carried by the fuel becoming trapped by the mesh filter member 18. When the fuel is relatively cold, a high proportion of waxy particles are carried by the flow of fuel, thus the mesh filter member 18 becomes partially clogged by these particles. Fuel is also able to flow through the relatively large openings 20, and as the large openings 20 are located in a part of the mesh filter member 18 close to the heater, it will be appreciated that the quantity of waxy particles carried by this flow of fuel is relatively low as this fuel is relatively warm. The fuel passing through the mesh filter member 18 is incident upon the dirty side of the paper filter medium 16, and the fuel is drawn through the paper filter medium 16 to the interior of the tubular member 14. The paper filter medium 16 traps contaminants carried by the flow of fuel, and any waxy particles which are able to pass through the relatively large openings 20 are also trapped by the paper filter medium 16. The fuel from the interior of the tubular member 14 is able to flow through the outlet of the cap to the pump arrangement.

As the engine to which fuel is supplied is operated, the temperature thereof increases and the temperature of the fuel in the fuel reservoir also increases due to heat dissipation. The increased temperature of fuel within the fuel reservoir results in a reduction in the quantity of waxy particles in the flow of fuel to the filter and, subsequently, as a result of the temperature increase, the waxy particles trapped by the mesh filter member 18 become liquid and are able to pass through the mesh filter member 18 and paper filter medium 16 to join the flow of fuel to the pumping arrangement.

Although in the described embodiment, the relatively large openings 20 are provided adjacent the upper support plate 10, it will be appreciated that the openings may additionally or alternatively be provided adjacent the lower support plate 12. As described hereinbefore, it is advantageous to locate the relatively large openings so as to be close to the fuel heater, thus the position of the openings is dependent upon the location of the fuel heater.

In the described embodiment, a single layer of filter mesh is provided. It will be appreciated, however, that the filter may include several such layers, each layer being provided with a plurality of relatively large openings. The provision of a plurality of such filter mesh layers increases the time before the paper filter medium 16 becomes clogged to an unacceptable degree, thus the selection of the number of filter mesh layers is dependent upon the intended use of the filter.

## Claims

1. A filter comprising a filter medium (16) having a dirty side and a clean side, the filter medium (16) being arranged such that, in use, fuel flows through the filter medium (16) from the dirty side to the clean side, and a filter member (18) located on the dirty side of the filter medium (16), the filter member (18) having a plurality of small openings permitting fuel to flow therethrough, but restricting the flow of large particles to the filter medium (16), and a plurality of large openings (20) whereby fuel containing such large particles is able to flow to the filter medium (16).

2. A filter as claimed in Claim 1, wherein the large openings are located in a part of the filter member (18) close to a fuel heater, in use.

3. A filter as claimed in Claim 1 or Claim 2, wherein the filter member (18) takes the form of a mesh.

4. A filter as claimed in Claim 3, wherein the mesh includes a plurality of small perforations of dimensions falling within the range 75 to 100 µm, and a plurality of large openings (20) of length falling within the range 2 to 8 mm.

5. A filter as claimed in any one of the preceding claims, further comprising at least one additional filter member located adjacent the said filter member (18) and including a plurality of small openings and a plurality of large openings.
